# EUROPÄISCHE PATENTSCHRIFT

(11) **EP 1 940 675 B1**
(45) Veröffentlichungstag und Bekanntmachung des Hinweises auf die Patenterteilung: **15.12.2010**
(21) Anmeldenummer: 06818282.3
(22) Anmeldetag: 24.10.2006
(51) Int. Cl.: B62D 55/275, B62D 55/28

(54) **RAUPENFAHRZEUG**
CATERPILLAR VEHICLE
VEHICULE A CHENILLES

(30) Priorität: 24.10.2005 DE 202005016716 U
(43) Veröffentlichungstag der Anmeldung: 09.07.2008
(73) Patentinhaber: Burkhardt, Johann, 87656 Germaringen (DE); Leinsle, Xaver, 87640 Biessenhofen (DE)
(72) Erfinder: Burkhardt, Johann, 87656 Germaringen (DE); Leinsle, Xaver, 87640 Biessenhofen (DE)
(74) Vertreter: Fiener, Josef
(86) Internationale Anmeldenummer: PCT/EP2006/010252
(87) Internationale Veröffentlichungsnummer: WO 2007/048582

(56) Entgegenhaltungen:
- JP-A- 4 133 882
- JP-A- 8 169 371
- JP-A- 59 096 071

## Beschreibung

Die Erfindung betrifft ein Raupenfahrzeug gemäß dem Oberbegriff des Anspruchs 1.

Raupenfahrzeuge werden für zahlreiche Einsatzarten verwendet, z. B. als Bagger mit hydraulisch angetriebenen Raupenketten oder aber auch als Schneemobile mit nur einer mittig angeordneten Raupenkette. Im Baubereich dienen Raupenfahrzeuge als Trägergeräte für verschiedene Arten von Arbeitsausrüstungen, wie z.B. Teleskop-, Kran- und Knickausleger und die daran betriebenen Arbeitsgeräte, wie z.B. Löffel, Greifer u.ä., werden aber auch für Planierraupen usw. verwendet. Derartige Fahrzeuge mit Raupenfahrwerk eignen sich insbesondere für schwere und nasse Böden. Die Raupenketten dieser Fahrzeuge werden dabei für eine möglichst hohe Traktion meist mit nach außen ragenden Stegen aus Stahlplatten gebildet. Ein derartiges Raupenfahrzeug ist beispielsweise aus der US 4,176,887 bekannt.

Ein weiteres Einsatzgebiet schwerer Raupenfahrzeuge liegt im Bereich der vollmechanisierten Holzernte (sog. Harvester). Hier kommen umgerüstete Kettenbagger zum Einsatz, bei denen Fällaggregate an Kranauslegern angebracht sind. Daneben werden umrüstbare Maschinen angeboten, die sowohl mit Raupenals auch mit Radfahrwerken betrieben werden können. Die Umrüstzeiten liegen hier jedoch bei mehreren Stunden. Forstmaschinen, die auf Raupenfahrzeugen basieren, werden vor allem für die Fällung in Hanglagen verwendet, da sie eine ausreichende Standfestigkeit bieten.

Ein Nachteil der angebotenen Systeme liegt in der hohen Punktbelastung an den Aufstandspunkten, insbesondere bei großen Auslegeweiten. Ein weiteres Problem von Raupenfahrzeugen tritt beim Befahren von befestigten Straßen auf, was zu großen Schäden am Straßenbelag führen kann. Um diese Schäden zu reduzieren, können die Raupenketten mit bandartigen Kunststoffauflagen versehen werden, wie dies in der US-A- 3,441,321 beschrieben ist. Ein Nachteil derartiger Systeme ist der für die Montage solcher Auflagen relativ hohe Zeitbedarf. Hinzu kommt der Verschleiß, der beim Betrieb an schweren Maschinen auftritt und den häufigen Austausch dieser Kunststoffauflagen notwendig macht.

Aus der JP 59 096071 ist ein Raupenfahrzeug nach dem Oberbegriff von Anspruch 1 mit wenigstens einer angetriebenen Raupenkette bekannt, die aus Platten mit nach außen ragenden Stegen gebildet ist. Hierbei ist eine die Raupenkette bedeckende, endlose Überziehkette vorgesehen ist, die auf zumindest einem Teil der Stege aufliegt. Dabei wird das Problem eines schnellen und einfachen Kettenwechsels bzw. der problemlosen Nachrüstung einer Raupenkette mit der Überziehkette jedoch nicht angesprochen.

Werden Raupenfahrzeuge als Ernte- und/oder Bringungsmaschinen im Forstbereich eingesetzt, schädigen die Stege der Raupenketten außerdem die überfahrenen Wurzeln zum Teil massiv. Dadurch erhöht sich das Risiko einer bleibenden Schädigung der Wurzeln, was zu Folgeschäden am verbleibenden Bestand führen kann. Maschinen mit auswechselbarem Fahrwerk ermöglichen zwar eine Anpassung an die Geländegegebenheiten und die Bodensituation des Einsatzgebietes; durch die langen Umrüstzeiten entstehen für den Besitzer der Maschine aber zusätzliche Kosten, die nur bedingt an die Kunden weitergegeben werden können. Hinzu kommen höhere Kosten bei Wartungs- und Reparaturarbeiten, die bei derart ausgerüsteten Maschinen anfallen.

Der vorliegenden Erfindung liegt die Aufgabe zugrunde, ein Raupenfahrzeug zur Verfügung zu stellen, das die auf dem Untergrund erzeugte Belastung reduziert und einfach nach- bzw. umzurüsten ist.

Diese Aufgabe wird mit einem Raupenfahrzeug gemäß Anspruch 1 gelöst. Vorteilhafte Weiterbildungen der Erfindung sind Gegenstand der abhängigen Ansprüche.

Erfindungsgemäß ist dabei vorgesehen, die Lauffläche der angetriebenen Raupenkette mit einer Überziehkette zu bedecken, die zumindest auf einem Teil der Stege der Raupenkette aufliegt. Hieraus ergibt sich eine Vergrößerung der Auflagefläche und damit eine positive Veränderung der Druckverteilung. Insbesondere tritt dadurch eine Reduzierung der auf dem Untergrund wirkenden Punktbelastung auf, wodurch Schäden, beispielsweise beim Befahren von Teerstraßen oder beim Überfahren von Wurzeln, verringert oder vermieden werden können.

Die über die Raupenkette gezogene Überziehkette ist vorzugsweise als Gliederkette ausgebildet, wobei die einzelnen Kettenglieder parallel angeordnete Achsen oder Bolzen aufweisen. Die Bolzen bestehen insbesondere aus einem hochfesten Stahl, um den auftretenden (Antriebs-) Belastungen standzuhalten. Die Bolzen sind bevorzugt durch sie umschließende Verbindungsplatten verbunden, wobei die seitlichen Bolzenenden frei bleiben, so dass diese durch Verbindungs-Laschen zwischen den einzelnen Kettenglieder zu einer Endlos- Überziehkette verbunden werden können. Dabei sind auch jeweils Kürzungen oder Verlängerungen um jeweils ein Kettenglied möglich, um die Überziehkette an die jeweilige Raupenkette anpassen zu können. Die die Kettenglieder verbindenden Laschen sind bevorzugt aus zwei klammerartigen Teilen aufgebaut, die lösbar miteinander verbunden sind. Dabei erweist es sich als günstig, die beiden Teile symmetrisch teilbar zu gestalten, so dass sie die Bolzenenden der Kettenglieder umgreifen und über eine lösbare Verbindung, vorzugsweise Schrauben verbunden werden. Selbstverständlich sind auch andere, nicht symmetrische Teilungen denkbar. Die lösbaren Verbindungslaschen an den Seitenkanten der Überziehkette garantieren die schnelle und einfache Montage und Demontage der Überziehkette. Dadurch ist es möglich, gegebenenfalls durch Anpassung an die entsprechenden Abmessungen der Raupenkette, die Überzeihkette an verschiedenen Maschinen zu nutzen und damit Einsparungen bei den Anschaffungskosten zu realisieren.

An der Überziehkette, insbesondere an einem Teil der Verbindungslaschen sind vorspringende Führungsansätze vorgesehen, die sich an der Raupenkette vorbei radial nach innen erstrecken und so eine Seitenführung der Überziehkette bezüglich der Raupenkette gewährleisten. Um eine besonders stabile und gleichmäßige Seitenführung bei gleichzeitig sparsamem Einsatz von Führungsansätzen zu erzielen, sind die Kettenglieder wechselweise durch Verbindungslaschen mit Führungsansätzen und solche ohne Führungsansätze miteinander verbunden. Die Verbindungselemente sind dabei alternierend auf beiden Seiten der Kettenglieder in der Nähe der Bolzenenden so angeordnet, dass jeweils auf eine Verbindungslasche ohne Führungsansatz ein Lasche mit Führungsansatz folgt. Als günstig für die Seitenführung hat sich erwiesen, dass auf der einer Lasche mit Führungsansatz gegenüberliegenden Seite der Überziehkette eine Lasche ohne Führungsansatz angeordnet ist. Mit dieser Anordnung kann eine zuverlässige seitliche Zentrierung der Überziehkette bei ihrem Umlauf auf der Raupenkette erreicht werden.

Eine bevorzugte Ausführungsform der Führungsansätze sieht vor, dass jeder Führungsansatz zumindest zwei in Laufrichtung beabstandete Schenkel umfasst. Es sind aber auch weitere Ausführungsformen denkbar, beispielsweise mit nur einem Schenkel versehene oder halbkreis- oder kreisförmig geformte Führungsansätze. Die Verbindungsplatten der Überziehkette können aus einem elastischen Material, vorzugsweise aus Gummi, bestehen oder damit überzogen sein. Diese Maßnahme ermöglicht ein noch schadenärmeres Befahren von befestigten Straßen und lässt darüber hinaus höhere Fahrgeschwindigkeiten zu. Zudem wird durch die vorgeschlagene Benutzung einer Überziehkette über der Raupenkette deren Verschleiß minimiert und somit deren Haltbarkeit verlängert. Der durch derartige Verbindungsplatten erreichte Dämpfungseffekt bewirkt außerdem eine Reduzierung der auf den Maschinenführer wirkenden Belastung und ermöglicht somit eine ergonomisch günstigere und ermüdungsfreiere Arbeitsumgebung. Beim Einsatz entsprechender Raupenfahrzeuge im Forstbereich wird zudem der Schutz der Wurzeln vor Schädigungen erreicht.

Zur Verbesserung der Traktion zwischen Raupenkette und Überziehkette, beispielsweise beim Einsatz im Schlamm, wird vorgeschlagen, Traktionshilfen an den Stegen der Raupenkette anzubringen. Durch das formschlüssige Zusammenwirken zwischen den Traktionshilfen und den Verbindungsplatten wird eine verbesserte Kraftübertragung von der Raupenkette zur Überziehkette erreicht und das Ab- oder Durchrutschen der Überziehkette sicher vermieden. Die Traktionshilfen bestehen beispielsweise aus zwei auf dem jeweiligen Steg angebrachten Zylinderabschnitten, wobei auch aufgeschweißte leistenförmige Ausführungen möglich sind. Die Verbindungsplatten werden dabei so modifiziert, dass zum formschlüssigen Eingriff entsprechende Ausnehmungen für die Traktionshilfen geschaffen werden. Diese Ausnehmungen können, sofern sie nicht bereits bei der Herstellung der Verbindungsplatten vorgesehen wurden, auch nachträglich, beispielsweise in Form einer eingefrästen Nut erstellt werden.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnung. Es zeigen:
- Fig. 1: eine bevorzugte Ausführungsform des erfindungsgemäßen Raupenfahrzeuges mit schematischer Explosionsdarstellung des Raupenlaufwerks,
- Fig. 2: einen Querschnitt durch die Überziehkette und die Raupenkette,
- Fig. 3: eine perspektivische Ansicht eines Teils der Überziehkette, und
- Fig. 4: eine perspektivische Ansicht einer mit Traktionshilfe versehenen Platte der angetriebenen Raupenkette.

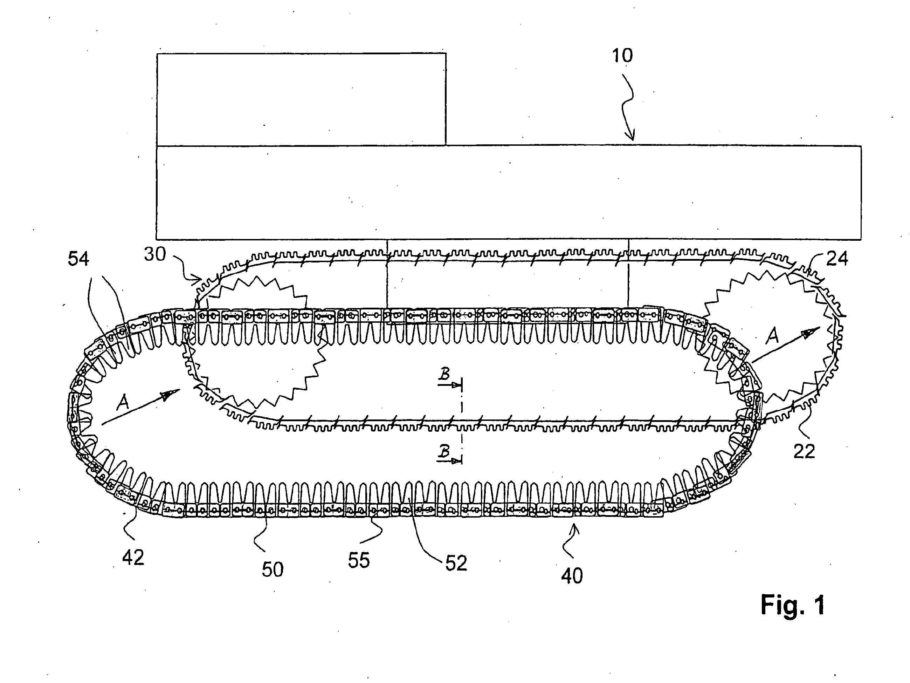

Fig.1 zeigt ein erfindungsgemäßes Raupenfahrzeug 10 in schematischer Darstellung. Zur besseren Übersicht ist hier nur eine der zwei das Fahrwerk von Raupenfahrzeugen bildenden Raupenketten 30 gezeigt. Zur Verdeutlichung wichtiger Details sind die Raupenkette 30 und die sie bedeckende Überziehkette 40 in auseinander gezogener Explosionsdarstellung gezeigt. Erfindungsgemäß ist jedoch vorgesehen, dass die beiden Ketten 30, 40 beim Einsatz übereinander angeordnet sind, wie dies mit dem Pfeilen A angedeutet ist, so dass die Überziehkette 40 die Raupenkette 30 umhüllt bzw. umgreift. Die angetriebene Raupenkette 30 ist aus Platten 24 gebildet, die mit abstehenden Stegen 22 versehen sind. Fig. 1 zeigt eine bevorzugte Ausführung der Raupenkette 30 mit Platten 24, die jeweils drei Stege 22 aufweisen. Alternativ ist die Verwendung von 2-Steg- oder 1-Steg-Stahlplatten zur Bildung der Raupenkette 30 ebenso möglich.

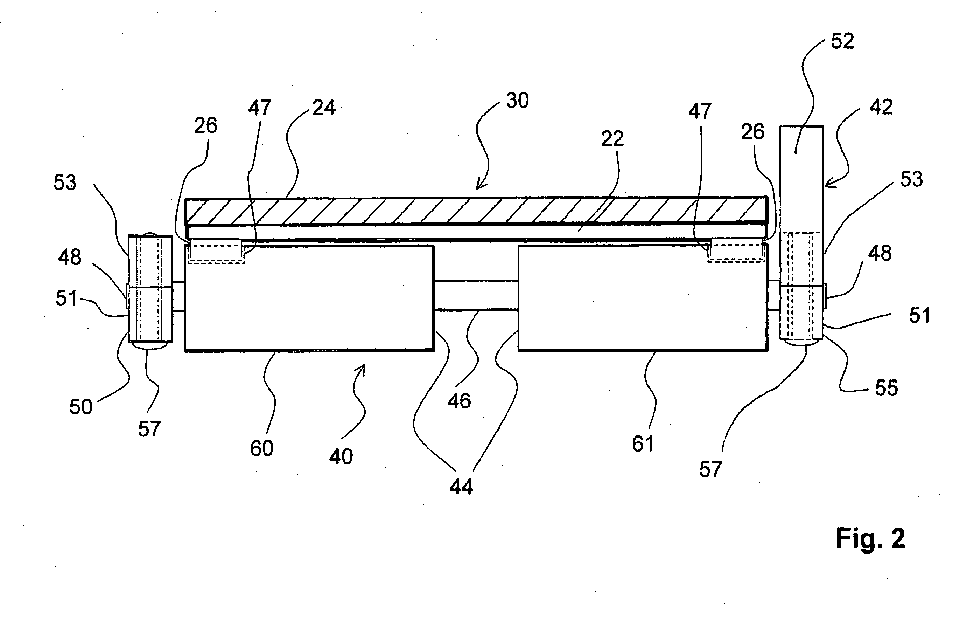

Die Überziehkette 40 ist aus einzelnen Kettengliedern 42 gebildet, die jeweils seitlich durch unterschiedliche Verbindungslaschen 50, 55 miteinander verbunden sind. Dabei weisen die Verbindungslaschen 50 einen einfacheren Aufbau auf und dienen nur zur Verbindung der einzelnen Kettenglieder 42, wie dies bei Kettentrieben üblich ist, während die Verbindungselemente 55 zusätzlich abstehende Führungsansätze 52 aufweisen. Die Führungsansätze 52 erstrecken sich nach dem Auflegen der Überziehkette 40 (vgl. Pfeil A in Fig. 1 bzw. die Montageposition in Fig. 2) auf die Raupenkette 30 an dieser vorbei und gewährleisten somit die sichere Seitenführung der Überziehkette 40 auf der Raupenkette 30. Die Verbindungslaschen 50, 55 sind alternierend an der Überziehkette 40 angebracht, so dass auf eine Lasche 55 mit Führungsansatz 52 eine "gewöhnliche" Lasche 50 folgt. Auf der gegenüberliegenden Seite der Überziehkette 40 befinden sich ebenfalls Verbindungslaschen 55, 50 wechselweise mit bzw. ohne Führungsansatz 52. Diese Verbindungslaschen 55, 50 sind dabei auf beiden Seiten der Überziehkette 40 so angeordnet, dass jeweils eine Lasche 55 mit Führungsansatz 52 einer "glatten" Lasche 50 (ohne Führungsansatz) gegenüber angebracht ist. Fig.1 zeigt eine bevorzugte Ausführungsform der Laschen 55 mit Führungsansätzen 52, die zwei in Laufrichtung beabstandete Schenkel 54 umfassen. Dabei sind für die Führungsansätze 52 auch andere Formgebungen, wie beispielweise einschenklige oder kreis- bzw. halbkreisförmige Formen denkbar.

Fig. 2 zeigt einen Querschnitt durch das bodenseitige Untertrum der Raupenkette 30 (schraffiert dargestellt; gemäß Schnittlinie B-B in Fig. 1) und die Überziehkette 40, die dabei im Reibschluss mit den Platten 24 der Raupenkette 30 umläuft. Ein Kettenglied 42 der "übergestülpten" Überziehkette 40 wird aus zwei Achsen bzw. Bolzen 46 (von denen hier nur einer dargestellt ist) gebildet, die durch eine zweiteilige Verbindungsplatte 44 verbunden sind. Die beiden Teile der Verbindungsplatte 44 erstrecken sich zu den Enden 48 der Bolzen 46 hin und bilden zwei bodenseitige Laufflächen 60, 61. Im Vergleich zu Fahrzeugen mit Raupenketten 30 ohne Überziehkette 40 weisen somit Raupenfahrzeuge 10 aufgrund der vergrößerten Lauffläche erheblich reduzierte Punktbelastungen auf den Untergrund aus. Bei einer ebenfalls vorstellbaren, einteiligen Ausführung der Verbindungsplatte 44 (nicht dargestellt) entsteht eine einzige, durchgehende Lauffläche mit einer noch weiter reduzierten Punktbelastung.

Wie aus Fig. 2 ersichtlich, liegt der Steg 22 der Platte 24 liegt auf den beiden Teilen der Verbindungsplatte 44 auf, so dass eine reibschlüssige Mitnahme beim Umlauf entsteht. Der Steg 22 kann zudem jeweils an seinen den seitlichen Laschen 50, 55 zugewandten Enden Traktionshilfen 26 aufweisen, die entsprechend vorgesehene Ausnehmungen 47 formschlüssig eingreifen. Die im Ausführungsbeispiel der Fig. 2 gezeigte Traktionshilfe 26 werden dann an den Stegen 22 angebracht, wenn eine verbesserte Kraftübertragung, von der Raupenkette 30 auf die Überziehkette 40, beispielsweise bei Einsatz im Schlamm, notwendig ist, obwohl meist der Reibschluss zwischen den übereinandergestülpten Ketten 30 und 40 aufgrund des hohen Gewichtes der Raupenfahrzeuge ausreicht.

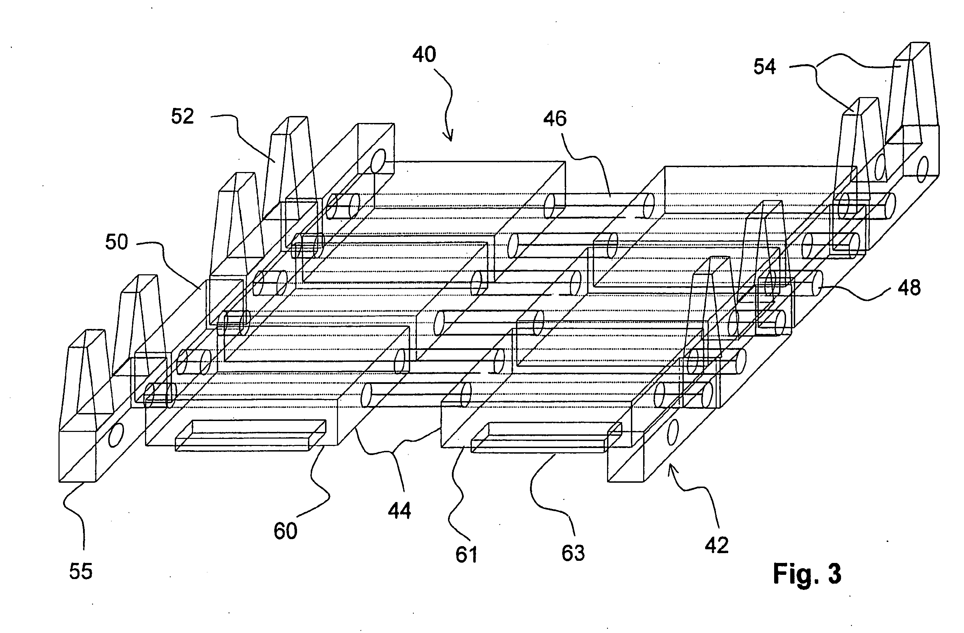

An den Enden 48 der Bolzen 46 sind die Verbindungslaschen 50, 55 angebracht, um das jeweilige Kettenglied 42 mit weiteren (nicht gezeigten) Kettengliedern 42 (vgl. Fig. 3) zu verbinden. Im Ausführungsbeispiel sind die Verbindungslaschen zweiteilig. Die beiden Teile 51, 53 sind gemäß der bevorzugten Ausführungsform gleich ausgebildet, umgreifen die Enden 48 der Bolzen 46 und sind durch Schrauben 57 miteinander verbunden. Die Verbindung durch Schrauben 57 stellt die bevorzugte Verbindungsform für die beiden Teile 51, 53 der Laschen 50, 55 dar, weil dadurch eine schnelle Lösbarkeit erreicht wird. Die Verbindungen zwischen den Kettengliedern 42 sind somit einfach zu öffnen, wodurch die rasche Trennung der Überziehkette 40 von der Raupenkette 30 realisiert werden kann, so dass dann das Raupenfahrzeug 10 durch einfaches Weiterfahren von der Überziehkette 40 herunterfahren kann. Die Montage erfolgt im umgekehrten Ablauf durch Auslegen der Überziehkette 40, dann Auffahren des Raupenfahrzeuges 10 mittels der üblichen Raupenketten 30 und Schließen der entsprechend abgelängten Überziehkette 40 mit den Laschen 50 bzw. 55. Die Überziehkette 40 ist dabei in ihrer Gesamtlänge um einige Prozent (z. B. 3%) länger als die Raupenkette 30, damit die Überziehkette 40 auf letztere einfach aufgezogen und mit den Laschen 50, 55 ohne zusätzliches Spannen geschlossen werden kann. Gegenüber jeder Verbindungslasche 55 mit Führungsansatz 52 ist dabei bevorzugt eine Verbindungslasche 50 (ohne Führungsansatz 52) angebracht, wodurch die stabile Seitenführung der übergestülpten Überziehkette 40 auf der Raupenkette 30 gewährleistet ist.

Fig. 3 zeigt einen drei Kettenglieder 42 umfassenden Teil der Überziehkette 40 in perspektivischer Darstellung. Im Ausführungsbeispiel umgreifen die zweiteilig ausgebildeten Verbindungsplatten 44 die Achsen 46 rechts und links von deren Mitte und lassen somit deren Enden 48 frei. Die Laufflächen 60, 61 auf der Unterseite der Verbindungsplatten 44 weisen eine zusätzliche Profilierung 63 zur Vergrößerung der Oberfläche und zur Verbesserung der Traktion auf. Die Kettenglieder 42 werden an den beiden, die Verbindungsplatten 44 überragenden Enden 48 der Bolzen 46 durch die Laschen 50, 55 verbunden. Diese weisen die vorstehend angegebenen Formen mit und ohne die aus zwei Schenkeln 54 gebildeten Führungsansätze 52 auf und werden ebenfalls im Wechsel so angebracht, dass sich an der rechten und linken Seitenkante der Überziehkette 40 jeweils unterschiedlich geformte Elemente 50, 55 gegenüber stehen.

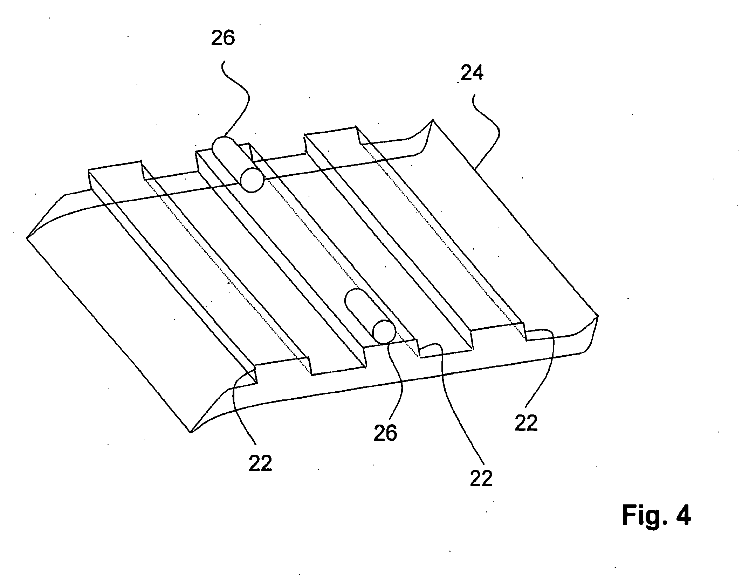

Fig. 4 zeigt eine der Platten 24, aus denen die aus Fig. 1 bekannte Raupenkette 30 gebildet ist. An den Außenkanten des mittleren Steges 22 ist jeweils eine aus Zylinderabschnitten gebildete Traktionshilfe 26 angebracht, insbesondere aufgeschweißt. Gemäß weiteren Ausführungen können an gleicher Stelle auch leistenartige Abschnitte vorgesehen sein, die in die in Fig. 2 gezeigten Ausnehmungen 47 in den Verbindungsplatten 44 der Überziehkette 40 eingreifen. Darüber hinaus sind auch Traktionshilfen 26 denkbar, die zwischen den Stegen 22 angebracht sind, diese überragen und so in die obengenannten, in Fig. 2 dargestellten Ausnehmungen 47 formschlüssig eingreifen können, um so eine verbesserte Kraftübertragung von der Raupenkette 30 (vgl. Fig. 1) auf die Überziehkette 40 (vgl. Fig. 1) zu erreichen.

Es ist festzuhalten, dass die unter Bezug auf einzelne Ausführungsformen beschriebenen Merkmale der Erfindung, wie beispielsweise die Ausgestaltung der Raupenkette, bzw. ihrer Teile, der Verbindungslaschen oder der Traktionshilfen auch bei anderen Ausführungsformen vorhanden sein können.

## Patentansprüche

1. Raupenfahrzeug (10) mit wenigstens einer angetriebenen Raupenkette (30), die aus Platten (24) mit nach außen ragenden Stegen (22) gebildet ist, wobei eine die Raupenkette (30) bedeckende Überziehkette (40) vorgesehen ist, die auf zumindest einem Teil der Stege (22) aufliegt, **dadurch gekennzeichnet, dass** die Überziehkette (40) aus Kettengliedern (42) besteht, die jeweils zwei Bolzen (46) aufweisen, die durch mindestens eine Verbindungsplatte (44) miteinander verbunden sind, und benachbarte Kettenglieder (42) jeweils an den Enden (48) der Bolzen (46) mit Laschen (50, 55) verbunden sind.

2. Raupenfahrzeug nach Anspruch 1, **dadurch gekennzeichnet, dass** jede Lasche (50, 55) aus zwei Teilen (51, 53) besteht, die lösbar miteinander verbunden sind.

3. Raupenfahrzeug nach einem der Ansprüche 1 oder 2, **dadurch gekennzeichnet, dass** die Überziehkette (40) zur Seitenführung bezüglich der Raupenkette (30) überstehende Führungsansätze (52) aufweist.

4. Raupenfahrzeug nach Anspruch 3, **dadurch gekennzeichnet, dass** die Führungsansätze (52) an zumindest einem Teil der Laschen (55) vorgesehen sind.

5. Raupenfahrzeug nach Anspruch 4, **dadurch gekennzeichnet, dass** an jeder zweiten Lasche (55) wechselweise zumindest ein Führungsansatz (52) vorgesehen ist.

6. Raupenfahrzeug nach einem der Ansprüche 3 bis 5, **dadurch gekennzeichnet, dass** jeder Führungsansatz (52) zumindest zwei in Laufrichtung beabstandete Schenkel (54) umfasst.

7. Raupenfahrzeug nach einem der Ansprüche 1 bis 6, **dadurch gekennzeichnet, dass** die Verbindungsplatte (44) mit einem elastischen Material, insbesondere Gummi, überzogen oder weitgehend aus diesem gebildet ist.

8. Raupenfahrzeug nach Anspruch 7, **dadurch gekennzeichnet, dass** jede Verbindungsplatte (44) zwei Teile umfasst, die beidseitig der Mitte der Bolzen (46) angebracht sind und jeweils eine Kettengliedlauffläche (60, 61) bilden.

9. Raupenfahrzeug nach einem der Ansprüche 1 bis 8, **dadurch gekennzeichnet, dass** zur Verbesserung der Kraftübertragung von der Raupenkette (30) zur Überziehkette (40) an zumindest einem Teil der Stege (22) Traktionshilfen (26) für formschlüssigen Eingriff in die Verbindungsplatten (44) angebracht sind.

10. Raupenfahrzeug nach Anspruch 9, **dadurch gekennzeichnet, dass** die Traktionshilfen (26) Zylinderabschnitte oder Leisten zum Eingriff in entsprechend ausgeformte Ausnehmungen (47) der Verbindungsplatten (44) umfasst.

## Claims

1. Caterpillar vehicle (10) with at least one driven track (30), which is formed from plates (24) with outwardly protruding bars (22), wherein a cover track (40) is provided to cover the track (30) and to rest upon at least a part of the bars (22), **characterised in that** the cover track (40) consists of chain links (42) with two bolts (46) each, which are connected to each other by at least one connecting plate (44), and adjacent chain links (42) are connected at the ends (48) of the bolts (46) by tabs (50, 55).

2. Caterpillar vehicle according to claim 1, **characterised in that** each tab (50, 55) consists of two parts (51, 53), which are releasable connected to each other.

3. Caterpillar vehicle according to claim 1 or 2, **characterised in that** the cover track (40) has guide tips (52) protruding the track (30) for lateral guidance.

4. Caterpillar vehicle according to claim 3, **characterised in that** the guide tips (52) are provided with at least a part of the tabs (55).

5. Caterpillar vehicle according to claim 4, **characterised in that** each second tab (55) has alternately at least one guide tip (52).

6. Caterpillar vehicle according to one of the claims 3 to 5, **characterised in that** each guide tip (52) includes two legs (54), spaced in running direction.

7. Caterpillar vehicle according to one of claims 1 to 6, **characterised in that** the connecting plate (44) is coated with an elastic material, in particular rubber, or is largely made thereof.

8. Caterpillar vehicle according to claim 7, **characterised in that** each connecting plate (44) includes two parts, which are attached at both sides of the middle of the bolts (46) and form a track member bearing surface (60, 61), each.

9. Caterpillar vehicle according to one of claims 1 to 8, **characterised in that** at least a part of the bars (22) has traction assistance (26) for positive engagement into the connecting plates (44) in order to improve traction of the track (30) to the cover track (40)

10. Caterpillar vehicle according to claim 9, **characterised in that** the traction assistance (26) includes cylinder portions or strips for the engagement into correspondingly formed recesses (47) of the connecting plates (44).

## Revendications

1. Véhicule chenillé (10) comprenant au moins une chaîne chenillée (30) entraînée, constituée de patins (24) munis de membrures (22) en saillie vers l'extérieur, sachant qu'il est prévu une chaîne de recouvrement (40) couvrant ladite chaîne chenillée (30), et en applique sur au moins une partie desdites membrures (22), **caractérisé par le fait que** la chaîne de recouvrement (40) est constituée de chaînons (42) respectivement pourvus de deux axes (46) reliés l'un à l'autre par l'intermédiaire d'au moins un patin de solidarisation (44), des chaînons (42) voisins étant respectivement reliés à des attaches (50, 55) aux extrémités (48) desdits axes (46).

2. Véhicule chenillé selon la revendication 1, **caractérisé par le fait que** chaque attache (50, 55) est composée de deux parties (51, 53), reliées l'une à l'autre de manière libérable.

3. Véhicule chenillé selon l'une des revendications 1 ou 2, **caractérisé par le fait que** la chaîne de recouvrement (40) présente, en vue du guidage latéral, des appendices de guidage (52) faisant saillie par rapport à la chaîne chenillée (30).

4. Véhicule chenillé selon la revendication 3, **caractérisé par le fait que** les appendices de guidage (52) sont prévus sur au moins une partie des attaches (55).

5. Véhicule chenillé selon la revendication 4, **caractérisé par le fait qu'**au moins un appendice de guidage (52) est prévu, en alternance, à raison d'une attache (55) sur deux.

6. Véhicule chenillé selon l'une des revendications 3 à 5, **caractérisé par le fait que** chaque appendice de guidage (52) compte au moins deux branches (54), espacées dans la direction du déplacement.

7. Véhicule chenillé selon l'une des revendications 1 à 6, **caractérisé par le fait que** le patin de solidarisation (44) est revêtu d'un matériau élastique, en particulier de caoutchouc, ou est constitué par ce dernier dans une large mesure.

8. Véhicule chenillé selon la revendication 7, **caractérisé par le fait que** chaque patin de solidarisation (44) est composé de deux parties qui sont implantées de part et d'autre du centre des axes (46) et forment, respectivement, une surface de roulement (60, 61) d'un chaînon.

9. Véhicule chenillé selon l'une des revendications 1 à 8, **caractérisé par le fait que** des auxiliaires de traction (26) conçus pour pénétrer dans les patins de solidarisation (44), par complémentarité de formes, sont montés sur au moins une partie des membrures (22) afin d'améliorer la transmission de forces à la chaîne de recouvrement (40), depuis la chaîne chenillée (30).

10. Véhicule chenillé selon la revendication 9, **caractérisé par le fait que** les auxiliaires de traction (26) comprennent des segments cylindriques ou des barrettes destiné(e)s à s'engager dans des évidements (47), de formes correspondantes, pratiqués dans les patins de solidarisation (44).
